# EUROPEAN PATENT APPLICATION

(11) **EP 4 628 726 A1**
(43) Date of publication of application: **08.10.2025**
(21) Application number: 24382341.6
(22) Date of filing: 02.04.2024
(51) Int. Cl.: F03D 13/10, F03D 13/20, F03D 13/40

(54) **WIND TURBINE ASSEMBLY SYSTEM AND RELATED ASSEMBLY METHOD**

(71) Applicant: Nordex Energy Spain, S.A.U., 31395 Barasoain (Navarra) (ES)
(72) Inventor: García Maestre, Iván, Barasoain (ES); Álvaro Gutiérrez, Pablo, Madrid (ES); Biedma García, Manuel, Madrid (ES); Ruppen Cañás, Francisco José, Pontevedra (ES)
(74) Representative: Pons IP

(57) **Abstract**

The present invention can be included in the technical field of the wind turbine assembly systems, wherein the wind turbine assembly system of the present invention proposes an alternative to assembly systems using climbing cranes that install the tower sections sequentially as they climb on the previous section already in place, being an additional object of the invention an assembly method for a wind turbine.

## Description

### OBJECT OF THE INVENTION

The present invention can be included in the technical field of the wind turbine assembly systems.

The wind turbine assembly system of the present invention proposes an alternative to assembly systems using climbing cranes that install the tower sections sequentially as they climb on the previous section already in place.

An additional object of the invention is also an assembly method for a wind turbine.

### BACKGROUND OF THE INVENTION

The increase in the rated power of wind turbines entails the increase in weights and dimensions of all the turbine components in general, but the following aspects are of special relevance for the assembly costs:
- The height of the tower;
- Diameter of the rotor and weight of the blades-hub unit;
- Weight of the nacelle and subcomponents;
- Weight of the tower sections.

Of the above, the most relevant is the height of the tower, existing already designs of 120 m and more, especially for the assembly of relatively voluminous and heavy components such as the aforementioned: the large overturning moments associated to the increase in height make it necessary to have a high capacity crane. Usually, conventional cranes supported on the ground like mobile crawler cranes are used and tower cranes -which have been introduced recently as an alternative to the previously mentioned ones- are used for the erection of wind turbines.

Mobile crawler cranes have been the standard solution for the installation of the latest generation of turbines, with a tower height in a range up to 120m. This type of crane can be moved fully assembled between positions under certain assumptions (such as a very low road longitudinal slope and minimum road width of more than 6m). However, if the crane has to be dismantled, a substantial area for the boom assembly and disassembly process will be needed.

Tower cranes provide safe erection of wind turbines with hub heights of 110m or more in low-wind areas. Wind turbines can therefore be erected with wind speeds of up to 18m/s. However, there is a lack of experience of the operators with these new set of cranes and low offer worldwide, as well as uncertainty on the actual installation rates due to insufficient track record; Also, real installation costs are still unknown.

Both solutions, mobile crawler cranes and tower cranes, are limited to heights above 120m not being possible to carry out the assembly of wind turbines up to 180m.

The high costs and the described drawbacks justify the search for alternative means to build wind turbines, including the tower.

Other references as well as the conventional cranes described above are known in the state of the art related to two types of solution:
- Self-climbing systems (understanding as such structures that are supported and raised throughout the tower);
- Bridge-crane type solutions supported on lattices on the ground.

Among the climbing solutions, patent US6868646B2 is known regarding a method and means for erecting a wind turbine tower.

Said means incorporate two structures: a lower one, whereto a hoist cable is fastened at a point close to the lower part, and an upper one, which supports the bridge crane-type structure. The hoist cable passes through a pulley fastened to a suitable fastening point in the tower close to the upper part of each section and it is wound in a winch located on the ground.

The system goes up and down the tower every time a section is assembled. Then, once it has been assembled on top of the lower sections of the tower, the unit is lowered, another section is fastened and it is hoisted again. The lower structure incorporates a wheel/roller system adapted to cooperate with guides situated in the tower.

The self-climbing structures can be light and have reduced dimensions, as they use as support of the weight of the assembled components the tower (or the part of the tower already assembled).

However, the self-climbing structures by pulleys, jacks or similar require some kind of guiding of the structure over the tower to guarantee that there is no interference with the tower during the lifting of the structure. In the case of a conical tower, a typical design of concrete is used, the guiding system becomes complicated, as it requires a spring-type element to guarantee the compression of wheels or rollers on the tower surface and avoid said interference. Alternatively, the climbing is performed by friction between a mechanism disposed on the structure and the tower, the mechanism supporting all the weight of the self-climbing structure. In this case, it is again required that the mechanism is capable of adapting to the tower's conical shape.

Furthermore, the lattice-based structures are large structures that will require a large number of trucks for their transport. They have the advantage, compared with climbing solutions, that they can be used with any type of tower without the need to vary their design, since it is not necessary to provide them with additional fastening points or supports to fasten the climbing structure.

The wind turbine assembly system of the present invention and its related method solve all the previous drawbacks reducing the costs associated to the assembling of the wind turbine.

### DESCRIPTION OF THE INVENTION

The invention relates to a wind turbine assembly system.

In a first aspect of the invention, the wind turbine assembly system comprises a flipping system configured to carry out the lifting of a lifting structure configured to assembly, at least partially, the wind turbine comprising a tower, wherein the flipping system is configured to flip the lifting of the lifting structure from an essentially horizontal position to an essentially vertical position wherein the lifting structure is positioned and attached to the tower of the wind turbine, wherein the flipping system comprises:
- a flipping frame comprising at least one first connection element;
- the lifting structure to be flipped, wherein the lifting structure comprises at least one second connection element;
wherein the at least one first connection element is configured to be coupled to the at least one second connection element, optionally allowing a relative movement between the lifting structure and the flipping frame.

Optionally, the first connection element is configured to be coupled to the at least one second connection element in a rotary manner defining an axis of rotation.

Optionally, the at least one first connection element comprises at least one pivoting hole or at least one flipping pin.

Optionally, the at least one second connection element comprises at least one flipping pin or at least one pivoting hole.

Optionally, the flipping system further comprises first auxiliary lifting means configured to flip the lifting structure to be flipped in a rotary manner around the axis of rotation.

Optionally, the flipping frame comprises a planar lower structure configured to be directly supported on the ground.

Optionally, the flipping frame is a counterbalanced frame. In this way, it is not necessary to physically anchor the flipping frame to the ground or to the concrete tower.

Optionally, the flipping frame rests on an upper base of the concrete foundation of the wind turbine. This gives a position of the flipping frame relative to the tower axis.

Optionally, the flipping frame is positioned in a compacted ground area.

Optionally, the flipping frame is disposed perpendicular to an access road to the wind turbine.

Optionally, the at least one flipping pin or the at least one pivoting hole of the lifting structure is disposed in a lower end of a main structure or mast of the lifting structure (it is understood to be a lower end when the lifting structure is attached to the tower).

The lifting structure comprises a main structure comprising a longitudinal direction and being configured to be disposed essentially parallel to the tower of the wind turbine once attached to the tower for transmitting the stresses of the lifting structure itself and the wind turbine components being lifted during the assembly of the wind turbine, to a foundation through the tower.

The lifting structure further comprises a rotating turret configured to rotate with respect to a main body of the main structure, wherein the rotating turret comprises a longitudinal axis of rotation being essentially parallel to the longitudinal direction of the main body.

The lifting structure further comprises a boom configured to lift the components of the wind turbine during its assembly, once the main structure has been attached to the tower. The boom is also configured to rotate with respect to the rotating turret comprising an axis of rotation being essentially perpendicular to the longitudinal direction of the main structure.

Optionally, the lifting structure comprises an articulated joint that joints the main structure and the boom in a rotatably way.

Optionally, the main structure of the lifting structure comprises the main body and the rotating turret disposed in an upper end of the main structure (it is understood to be an upper end when the lifting structure is attached to the tower), wherein the rotating turret is rotatable around a longitudinal axis defined in the longitudinal direction of the main body.

Optionally, the lifting structure is coupled to the flipping frame of the flipping system in an essentially horizontal position. Once the lifting structure is coupled to the flipping system it is possible to carry out the flipping of the lifting structure for positioning the lifting structure on the tower of the wind turbine in a provisional manner and in this way to carry out the lifting of the lifting structure to its definitive position along the tower of the wind turbine to assemble the components of the wind turbine and previously optionally some sections of the tower.

Preferably, the boom of the lifting structure is configured to be disposed above the main structure when the lifting structure is coupled to the flipping frame of the flipping system essentially in a horizontal position.

This position of the boom with regards to the main structure of the lifting structure allow to transport the lifting structure as a single-part element, from one wind turbine location to another. This configuration also increases the safety of the transportation of the lifting structure and improves the position of the centre of gravity of the lifting structure during the flipping.

In this way, the boom of the lifting structure is configured to be rotated from a first position wherein the boom is disposed above the main structure of the lifting structure to a second position wherein the boom is disposed in such a way that the main structure of the lifting structure is disposed between the tower and the boom.

Optionally, the first position of the boom corresponds to the essentially horizontal position of the lifting structure and/or the second position of the boom corresponds to the essentially vertical position of the lifting structure.

Optionally, the first position of the boom corresponds to a position between the essentially horizontal position and an inclined position of the lifting structure, and the second position of the boom corresponds to a position between the inclined position and the essentially vertical position of the lifting structure. This is achieved by rotating the boom with respect to the main structure and the rotating turret with respect to the main body of the main structure. Due to other elements present in the lifting structure which will be described below, the boom is raised with respect to the main structure when rotated, and after that, the rotating turret of the main structure rotates with regards to the main body.

This raising of the boom rotates said boom with regards to the main structure, in a first direction, reaching a deadlock. After that, the rotating turret rotates with regards to the main body around the longitudinal axis. Then, the rotation of the boom with regards to the main structure is carried out in a second direction opposite to the first direction, bringing the boom back to be adjacent to the main structure. In this way, the boom is rotated during the flipping manoeuvre so that the lifting structure can be positioned for lifting the wind turbine components. In this way, the kinematics of the boom reach essentially 180°.

Optionally, in the first position, the boom of the lifting structure is disposed in an essentially horizontal position and in the second position, the boom is disposed in an inclined position or in an essentially vertical position.

Optionally, during the flipping, the boom is maintained retracted against the main structure to reduce loads and improve the position of its centre of gravity during this stage, since the centre of gravity is as close as possible to the main structure. The rotation of the boom is carried out at a standstill of the flipping movement.

Optionally, during the flipping, the boom is rotated with regards to the main structure in the first direction and then in the second direction to reduce the flipping movement execution times.

In a first embodiment, the tower is a "full concrete" tower and the lifting structure is flipped once all the tower sections have been assembled by means of for example, a conventional crane disposed on a site near to the base of the foundation of the tower. The lifting structure is attached to first auxiliary lifting means attached to an adapter disposed above the highest concrete section of the tower for carrying out the assembly of the wind turbine components others than the tower until the whole wind turbine is assembled.

In a second embodiment, the tower is a "concrete-steel hybrid" tower and the lifting structure is flipped once all the concrete tower sections have been assembled by means of another lifting structure. The lifting structure is attached to first auxiliary lifting means attached to an adapter disposed above the highest concrete section of the tower for carrying out the assembly of the steel sections of the tower and the rest of the components of the turbine others than the tower until the whole wind turbine is assembled.

Optionally, the lifting structure comprises embracing means configured to embrace the tower and assist in the flipping of the lifting structure once the embracing means are embracing the tower.

In a second aspect of the invention, the assembly system comprises the lifting structure, wherein the lifting structure comprises the main structure and the boom described above.

Optionally, the lifting structure comprises embracing means configured to embrace the concrete section or concrete sections of the tower along the lifting of the lifting structure till the attaching of the lifting structure to the adapter of the tower.

Optionally, the embracing means are collapsible from a first position wherein the embracing means are essentially parallel to the main structure of the lifting structure to a second position wherein the embracing means are essentially perpendicular to the main structure of the lifting structure, in order to not interfere with other elements, preferably with the first auxiliary lifting means which will be described below, or not to protrude with other elements of the lifting structure during the transportation of the lifting structure which will be described below.

Preferably, the embracing means comprise lower embracing means configured to embrace the tower at a lower position and/or upper embracing means configured to embrace the tower at an upper position higher than the lower position. More preferably, the lower position is adjacent to the foundation of the tower.

Optionally, the lower embracing means, the upper embracing means or both of them comprise first telescopic arms configured to be retracted and, in this way, assist in the flipping of the lifting structure once the embracing means are embracing the tower.

The embracing means are configured to embrace the tower sections along the lifting of the lifting structure till its final position along the tower. This ensures the lifting of the lifting structure in an essentially vertical direction along the height of the tower. Preferably, the embracing means comprises an external structure that surrounds the tower section once the embracing means embrace the tower section. Preferably, the external structure is a polygonal structure. Preferably, the external structure comprises a right part and a left part linked in a decoupled manner for allowing the external structure to embrace the tower.

Optionally, the embracing means comprises second telescopic arms configured to adjust the embracing means to the diameter of the tower section wherein they are disposed, preferably by means of hydraulic means. Preferably, the second telescopic arms are joined to the external structure. In this way, a conicity of the tower is controlled when the lifting structure is lifted along the tower sections.

Optionally, the embracing means comprise guiding means configured to roll and grip the embracing means on a tower surface, preferably an external surface of the tower. Preferably, the guiding means are disposed in a free end of the second telescopic arms. In this way, a conicity of the tower is controlled while the lifting structure is being lifted along the tower.

In a third aspect of the invention, the assembly system comprises the first auxiliary lifting means configured to flip the lifting structure in a rotary manner around an axis of rotation.

Optionally, the first auxiliary lifting means are also configured to lift the lifting structure along the height of the tower once the lifting structure is disposed in the essentially vertical position wherein the lifting structure is positioned on the tower of the wind turbine.

Optionally, the first auxiliary lifting means comprise at least a first winch system disposed in the lifting structure. Preferably, the first winch system is disposed in the interior of the lifting structure. More preferably, the first winch system is disposed in the interior of the main structure of the lifting structure.

Optionally, the first auxiliary lifting means further comprise a set of cargo blocks fixed to the adapter. Preferably, the set of cargo blocks are disposed symmetrically with regard to the axis of the tower being fixed to the adapter in symmetrical lugs disposed radially on the adapter by means of platens wherein the cargo blocks are fixed. The first auxiliary lifting means are also symmetric with regard to the longitudinal axis of the main structure of the lifting structure.

Optionally, the first auxiliary lifting means further comprise at least one first idler pulley disposed in the lifting structure. Preferably, the first auxiliary lifting means comprise two first idler pulleys disposed in the lifting structure. More preferably, the two first idler pulleys are disposed at different heights in the lifting structure.

Optionally, the first auxiliary lifting means further comprise hoisting means, preferably at least one first rope, that connects the first winch system with the set of cargo blocks fixed to the adapter. Preferably, the hoisting means also connect the at least one first idler pulley disposed in the lifting structure with the first winch system and with the set of cargo blocks fixed to the adapter.

Also preferably, the hoisting means are disposed, at least partially, in the interior of the lifting structure. More preferably, the hoisting means are disposed, at least partially, in the interior of the main structure of the lifting structure.

The first winch system is configured to pull in the hoisting means, to lift the lifting structure along the tower till an attaching position.

Therefore, the loads related to the weight of the lifting structure during the lifting and assembly of said lifting structure are also supported by the tower since the set of cargo blocks is disposed on the adapter of the tower.

In a fourth aspect of the invention, the assembly system comprises attaching means configured to attach the lifting structure to the tower. Preferably, the attaching means are configured to attach the lifting structure to the adapter of the tower, directly or indirectly.

Optionally, the attaching means comprises holes disposed on the first auxiliary lifting means configured to receive antagonist pins disposed in the lifting structure, or vice versa. Preferably, the holes are disposed on the platens of the set of cargo blocks being antagonist to the pins disposed in the lifting structure.

Optionally, the pins disposed in the lifting structure are disposed on third telescopic arms of the lifting structure. In this way, the lifting structure can be positioned along a horizontal plane for positioning it in the attaching position which coincides with its working position for carrying out the lifting and assembly of the wind turbine components others than the tower until the whole wind turbine is assembled in the first embodiment wherein the tower is a "full concrete" tower or for carrying out the lifting and assembly of the steel sections of the tower and the rest of the components of the turbine others than the tower until the whole wind turbine is assembled in the second embodiment wherein the tower is a "concrete-steel hybrid" tower.

In this way, the pins (or the holes in the embodiment wherein the holes are disposed in the lifting structure) transmit horizontal forces to the tower and the third telescopic arms transmit vertical loads to the tower, through the platens of the set of cargo blocks mounted on the adapter.

Optionally, the third telescopic arms, as well as the longitudinal adjustment inherent to the telescopic feature are configured to carry out angular adjustment in order to provide a positioning tolerance that facilitates the process of installing the lifting structure in its working position. Preferably, the third telescopic arms comprise a hydraulic cylinder attached to the main structure of the lifting structure and to the third telescopic arms.

In a fifth aspect of the invention, the assembly system comprises second auxiliary lifting means configured to lift, at least partially, the first auxiliary lifting means to its position on the adapter.

Optionally, the second auxiliary lifting means comprises a crane fixed to the adapter.

Optionally, the adapter further comprises openings configured, in use, to allow the passage of the second auxiliary lifting means, preferably a telescopic crane comprising an arm passing through the openings of the adapter.

Optionally, the second auxiliary lifting means are also configured to dismantle the first auxiliary lifting means from the adapter.

Optionally, the second auxiliary lifting means comprises at least second winch system, a block and tackle system or similar fixed to the adapter or fixed to a base of the foundation of the tower.

Optionally, the second auxiliary lifting means further comprises at least one pulley disposed in the crane and/or at least one idler pulley and/or at least one movable pulley configured to redirect the second auxiliary lifting means.

Optionally, the second auxiliary lifting means comprises at least one second rope configured to connect the at least second winch system, a block and tackle system or similar to the crane fixed to the adapter. Preferably, the at least one second rope passes thorough the pulley and/or the at least one idler pulley and/or the at least one movable pulley.

In a sixth aspect of the invention, the assembly system comprises a layout of the components of a wind turbine for being at least partially assembled by means of the lifting structure, the layout of the components of the wind turbine comprising at least:
- a first wind turbine component, a second wind turbine component, a third wind turbine component and a fourth wind turbine component;

wherein the layout further comprises an angular origin point being essentially coincident with the intersection of the axis of rotation of the rotating turret with respect to the main structure, with regard to the base of the foundation of the tower, and an angular origin line defined as the horizontal projection with regard to the base of the foundation of the tower, of a line that joins the axis of rotation of the rotating turret and the axis of the tower, wherein the horizontal projection of the position of the boom of the lifting structure once the lifting structure is attached to the tower forms an angle with respect to the angular origin line; and
wherein the centre of gravity of each one of the wind turbine components to be assembled is disposed in the following angle range with regard to the angular origin line:
   first wind turbine component: [61º, 91º];
   second wind turbine: [40º, 70º];
   third wind turbine component: [265º, 295º]; and
   fourth wind turbine component: [78º, 128º].

Optionally, a centre of gravity of the first wind turbine component is between 10 and 18m from the angular origin point.

Optionally, a centre of gravity of the first wind turbine component is between 10 and 18m from the angular origin point.

Optionally, a centre of gravity of the first wind turbine component is between 10 and 18m from the angular origin point.

Optionally, a center of gravity of the first wind turbine component is between 24 and 32m from the angular origin point.

In this way, the sequence of operations to be carried out by the lifting structure is minimised, also minimising the time required to lift and assemble the wind turbine.

A seventh aspect of the invention is an assembly method of a wind turbine carried out with the assembly system comprising the lifting structure and the layout of the components of a wind turbine as described above, wherein the assembly method comprises the following steps once the lifting structure is attached to the tower:
- a step of lifting a first wind turbine component from a position wherein the horizontal projection of the boom is disposed in the following angle range with regard to the angular origin line: [61º, 91º];
- a step of lifting a second wind turbine component from a position wherein the horizontal projection of the boom is disposed in the following angle range with regard to the angular origin line: [40º, 70º];
- a step of lifting a third wind turbine component from a position wherein the horizontal projection of the boom is disposed in the following angle range with regard to the angular origin line: [265º, 295º]; and
- a step of lifting a fourth wind turbine component from a position wherein the horizontal projection of the boom is disposed in the following angle range with regard to the angular origin line: [78º, 128º].

Optionally, the step of lifting the first wind turbine component is carried from a distance between 10 and 18m from the angular origin point.

Optionally, the step of lifting the second wind turbine component is carried from a distance between 10 and 18m from the angular origin point.

Optionally, the step of lifting the third wind turbine component is carried from a distance between 10 and 18m from the angular origin point.

Optionally, the step of lifting the fourth wind turbine component is carried from a distance between 24 and 32m from the angular origin point.

Optionally, in the step of lifting the first wind turbine component, the horizontal projection of the boom is disposed forming an angle between 42.4º and 72.4º with a floor in the vicinity of the tower.

Optionally, in the step of lifting the second wind turbine component, the horizontal projection of the boom is disposed forming an angle between 42.4º and 72.4º with a floor in the vicinity of the tower.

Optionally, in the step of lifting the third wind turbine component, the horizontal projection of the boom is disposed forming an angle between 42.4º and 72.4º with a floor in the vicinity of the tower.

Optionally, in the step of lifting the fourth wind turbine component, the horizontal projection of the boom is disposed forming an angle between -15º and 15º with a floor in the vicinity of the tower.

Optionally, and for the layout and the assembly method described above, the first wind turbine component is a nacelle of the wind turbine,

Optionally, and for the layout and the assembly method described above, the second wind turbine component is a drive train of the wind turbine,

Optionally, and for the layout and the assembly method described above, the third wind turbine component is a rotor hub of the wind turbine,

Optionally, and for the layout and the assembly method described above, the fourth wind turbine component is a blade of the wind turbine,

The assembly method of a wind turbine carried out with the assembly system as described above further comprises the following steps carried out before the steps of lifting the wind turbine components:
- a step of coupling the lifting structure to be flipped to a flipping frame, optionally in a rotary manner; and
- a step of flipping a lifting structure from an essentially horizontal position to an essentially vertical position wherein the lifting structure is positioned and attached to the tower of the wind turbine.

Optionally, the method comprises the following step before the step of flipping the lifting structure:
- a step of lifting and attaching first auxiliary lifting means to a position on the tower, preferably to a position on the adapter, more preferably by means of the second auxiliary lifting means.

Optionally, the method comprises the following steps after the beginning of the step of flipping the lifting structure and before the steps of lifting the wind turbine components:
- a step of embracing at least a tower section of the tower by means of the lifting structure, preferably by means of embracing means of the lifting structure;
- a step of lifting the lifting structure along the tower, preferably by means of the first auxiliary lifting means;
- a step of attaching the lifting structure to the tower, preferably by means of attaching means.

Optionally, the method comprises a step of positioning the lifting structure in the proximity of the tower by means of transportation means before the step of flipping a lifting structure from an essentially horizontal position to an essentially vertical position wherein the lifting structure is positioned and attached to the tower of the wind turbine. Preferably, the step of positioning the lifting structure structure in the proximity of the tower by means of transportation means is a step of positioning the lifting structure on a self-propelled modular transporter,

The assembly method of a wind turbine carried out with the assembly system as described above further comprises the following steps carried out after the steps of lifting the wind turbine components:
- a step of detaching the lifting structure from the tower, preferably from the attaching means;
- a step of descending the lifting structure, preferably by means of the first auxiliary lifting means;
- a step of releasing the lifting structure from the at least a tower section, preferably releasing the embracing means of the lifting structure from the at least a tower section;
- a step of coupling the lifting structure to the flipping frame, optionally in a rotary manner- a step of flipping the lifting structure from the essentially vertical position wherein the lifting structure is positioned and attached to the tower of the wind turbine to the essentially horizontal position; and
- optionally a step of detaching and descending the first auxiliary lifting means to the ground from the adapter by means of the second auxiliary lifting means;

Optionally, the method further comprises a step of positioning the lifting structure on a transportation means. Preferably, the step of positioning the lifting structure on a transportation means is a step of positioning the lifting structure on a self-propelled modular transporter. More preferably, the step of positioning the lifting structure on a self-propelled modular transporter is performed directly after lowering and flipping it horizontally, without positioning the lifting structure on the ground.

In this way, the lifting structure can arrive or leave from one site of installation of a wind turbine to another without having to do a double handling.

### DESCRIPTION OF THE DRAWINGS

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:
Figure 1 shows a perspective view of the flipping frame of the flipping system of the wind turbine assembly system of the present invention.
Figure 2 shows a side view of the lifting structure disposed on the essentially horizontal position wherein the at least one flipping pin is coupled to the at least one pivoting hole in a rotary manner defining an axis of rotation.
Figure 3 shows a side view of the lifting structure disposed in an inclined position wherein the at least one flipping pin is coupled to the at least one pivoting hole in a rotary manner defining an axis of rotation and wherein the embracing means are in a first position wherein the embracing means are essentially parallel to the main structure of the lifting structure.
Figure 4 shows a perspective view of the lifting structure disposed in an inclined position wherein the at least one flipping pin is coupled to the at least one pivoting hole in a rotary manner defining an axis of rotation and wherein the embracing means are in a second position wherein the embracing means are essentially perpendicular to the main structure of the lifting structure.
Figure 5 shows a side view of the lifting structure disposed in an inclined position wherein the at least one flipping pin is coupled to the at least one pivoting hole in a rotary manner defining an axis of rotation and wherein the boom of the lifting structure is disposed in the deadlock position.
Figure 6 shows a perspective view of the lifting structure disposed in an inclined position wherein the at least one flipping pin is coupled to the at least one pivoting hole in a rotary manner defining an axis of rotation and wherein the embracing means are embracing the tower.
Figure 7 shows a perspective view of the embracing means in its position embracing the tower in a lower section.
Figure 8 shows a perspective view of the embracing means in its position embracing the tower in an upper section.
Figure 9 shows a side view of the lifting structure disposed on an essentially vertical position wherein the at least one flipping pin is coupled to the at least one pivoting hole in a rotary manner defining an axis of rotation and wherein the boom of the lifting structure is already disposed leaving the main structure between the tower and the boom.
Figure 10 shows a side view of the lifting structure disposed on an essentially vertical position and fixed to the attaching means.
Figure 11 shows a detail of Figure 10 showing the path of the hoisting means inside the main body of the main structure of the lifting structure.
Figure 12 shows a front view of Figure 11.
Figure 13 is a perspective view of a detail of Figure 11.
Figure 14 shows a perspective view of the first auxiliary lifting means for the lifting structure.
Figure 15 shows a perspective view of the lifting structure in its essentially horizontal position.

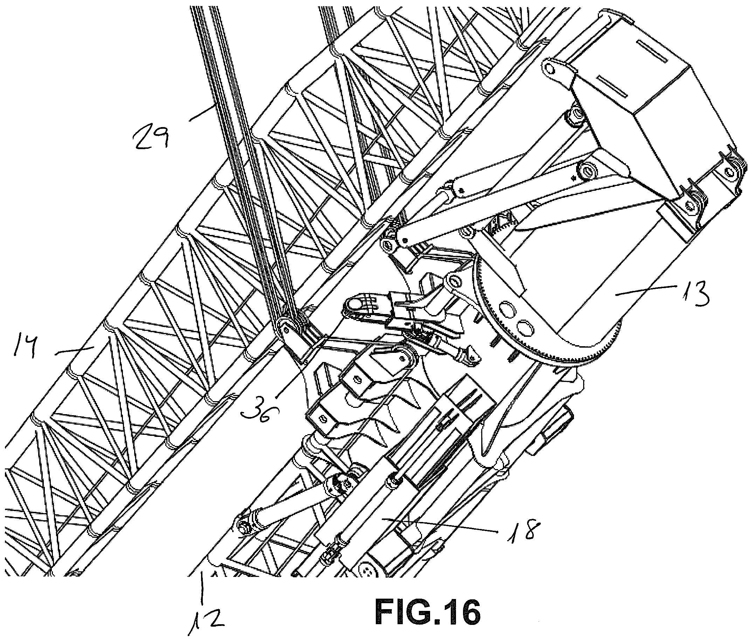

Figure 16 shows a perspective view of the lifting structure in an inclined position wherein the embracing means are in the first position being essentially parallel to the main structure of the lifting structure.

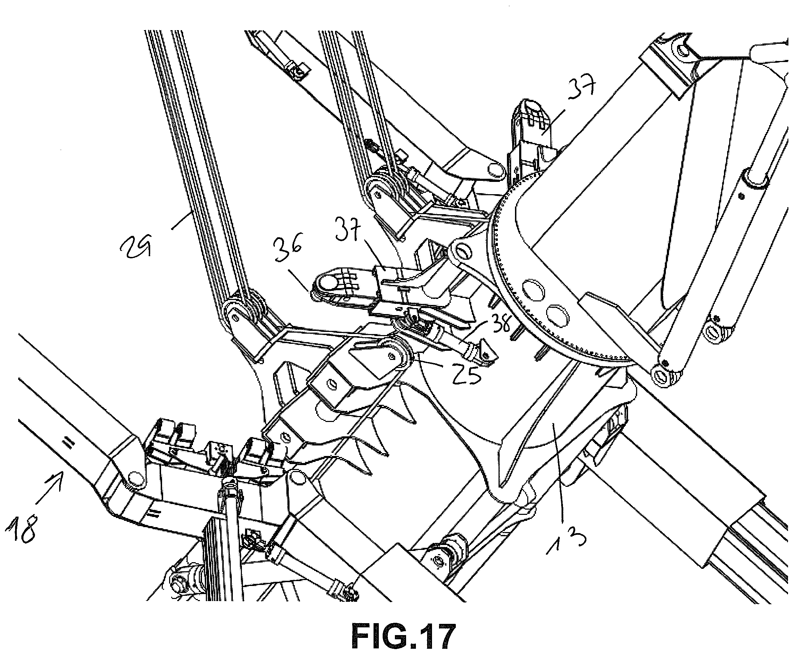

Figure 17 shows a perspective view of the lifting structure in an inclined position wherein the embracing means are in the second position being essentially perpendicular to the main structure of the lifting structure.

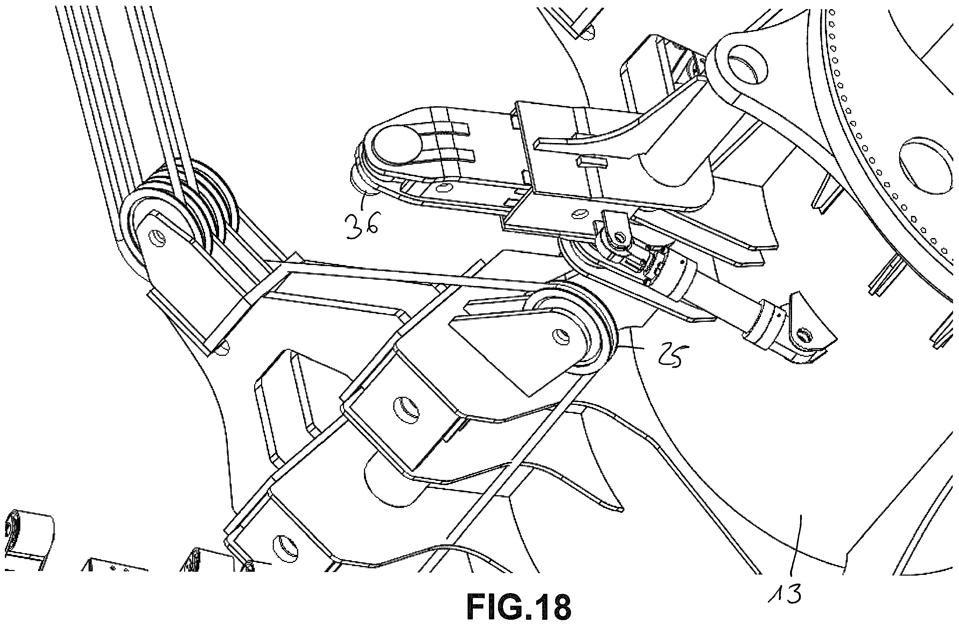

Figure 18 shows a perspective view of the lifting structure in an inclined position wherein the embracing means are in the second position being essentially perpendicular to the main structure of the lifting structure embracing the tower.

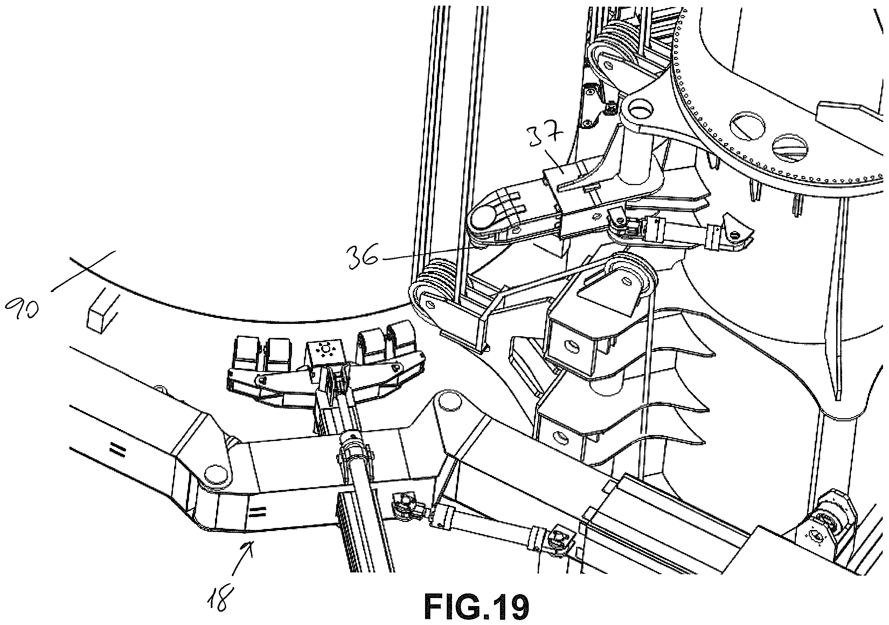

Figure 19 shows a perspective view of the lifting structure in the essentially vertical position wherein the embracing means are in the second position being essentially perpendicular to the main structure of the lifting structure embracing the tower.

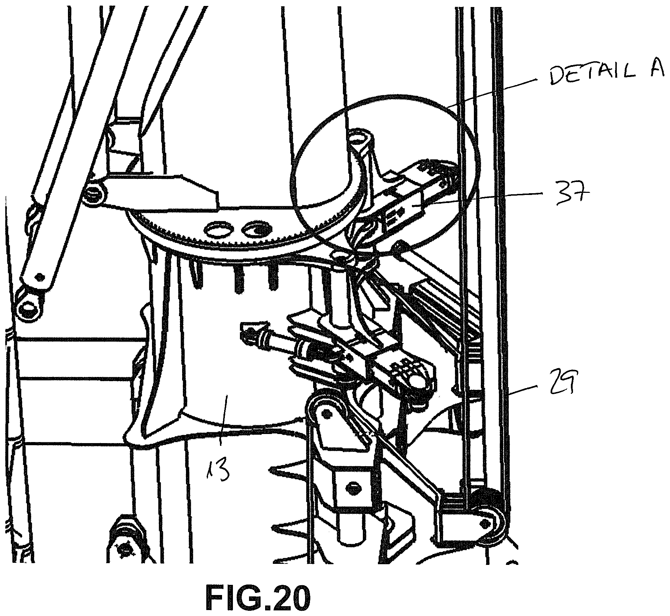

Figure 20 shows a top perspective view of the third telescopic arms of the attaching means configured to attach the lifting structure to the tower.

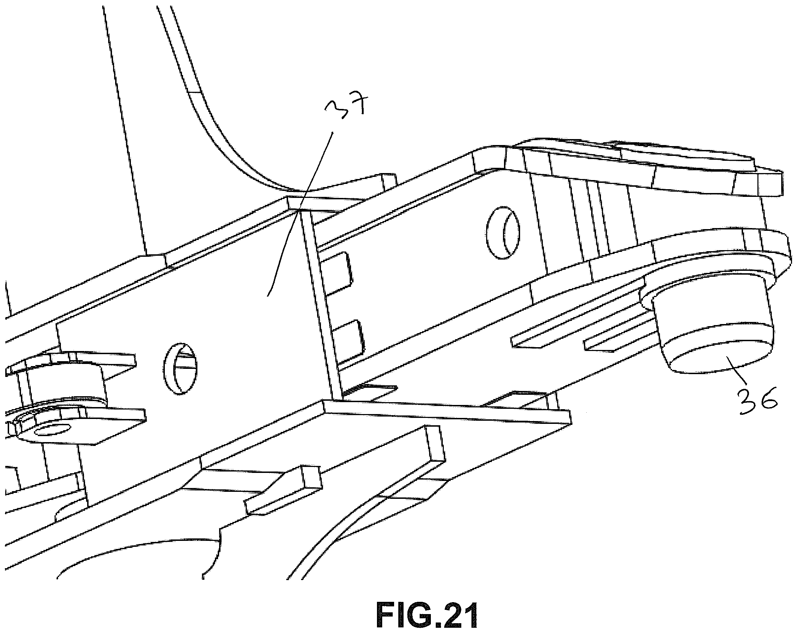

Figure 21 shows a bottom perspective view of a detail A of Figure 20 of the third telescopic arms of the attaching means configured to attach the lifting structure to the tower.

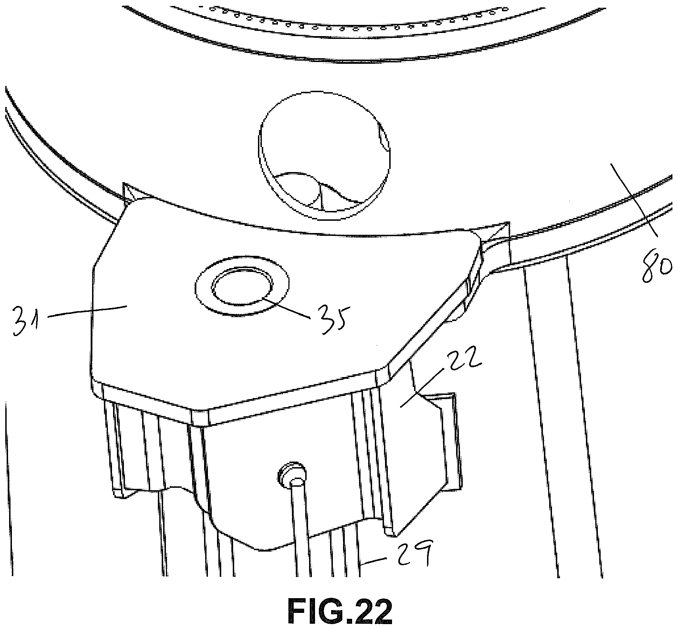

Figure 22 shows a top perspective view of the holes of the attaching means configured to attach the lifting structure to the tower.
Figure 23 shows a layout of the components of the wind turbine tower assembled with the wind turbine assembly system of the invention.

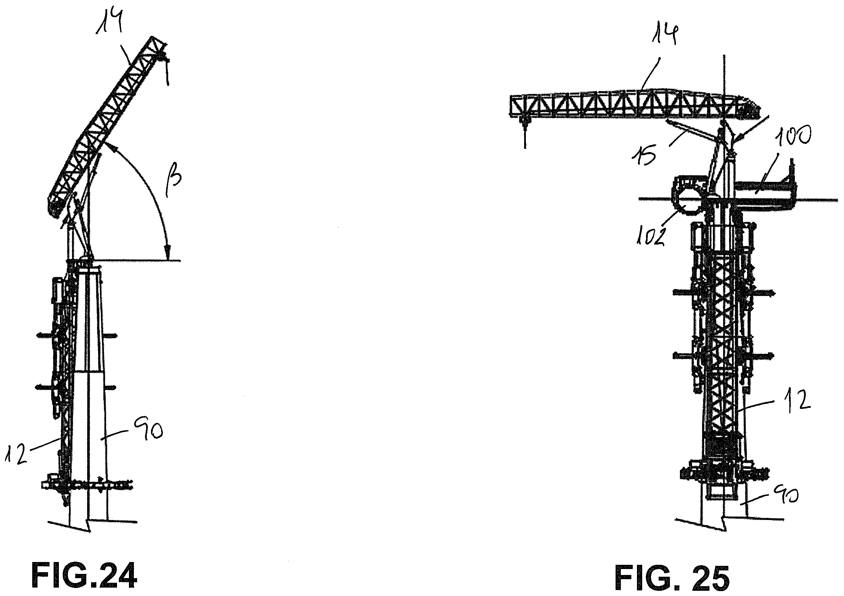

Figure 24 shows a side view of the boom of the lifting structure in the step of lifting the first, the second or the third wind turbine component of the assembly method of a wind turbine carried out with the assembly system of the present invention.
Figure 25 shows a side view of the boom of the lifting structure in the step of lifting the fourth wind turbine component of the assembly method of a wind turbine carried out with the assembly system of the present invention.
Figures 26 to 31 show different embodiments of the second auxiliary lifting means configured to lift, at least partially, the first auxiliary lifting means to its position on the adapter.

### DETAILED DESCRIPTION OF THE INVENTION

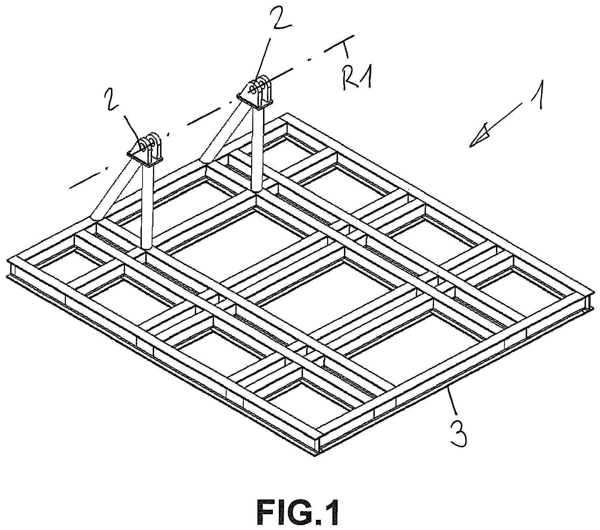

The following is a detailed description of the lifting system for wind turbine assembly system of the present invention, the wind turbine assembly system comprises a flipping system configured to carry out the lifting of a lifting structure configured to assembly, at least partially, the wind turbine comprising a tower, wherein the flipping system is configured to flip the lifting of a lifting structure from an essentially horizontal position to an essentially vertical position wherein the lifting structure is positioned and attached to the tower of the wind turbine, wherein the flipping system comprises:
- a flipping frame (1) comprising two pivoting holes (2) as shown in Figure 1;
- the lifting structure (10) to be flipped, wherein the lifting structure comprises at least one flipping pin (11);
wherein the at least one flipping pin (11) is configured to be coupled to the two pivoting holes (2) in a rotary manner defining an axis of rotation (R1), preferably a horizontal axis of rotation.

In this embodiment, the flipping system further comprises first auxiliary lifting means (20) configured to flip the lifting structure (10) to be flipped in a rotary manner around the axis of rotation (R1).

The flipping frame (1), being a counterbalanced frame, comprises a planar lower structure (3) configured to be directly supported on the ground, resting on a base (91) of a concrete foundation (92) of the tower (90) of the wind turbine. In this embodiment, the flipping frame (1) is disposed perpendicular to an access road (95) to the wind turbine.

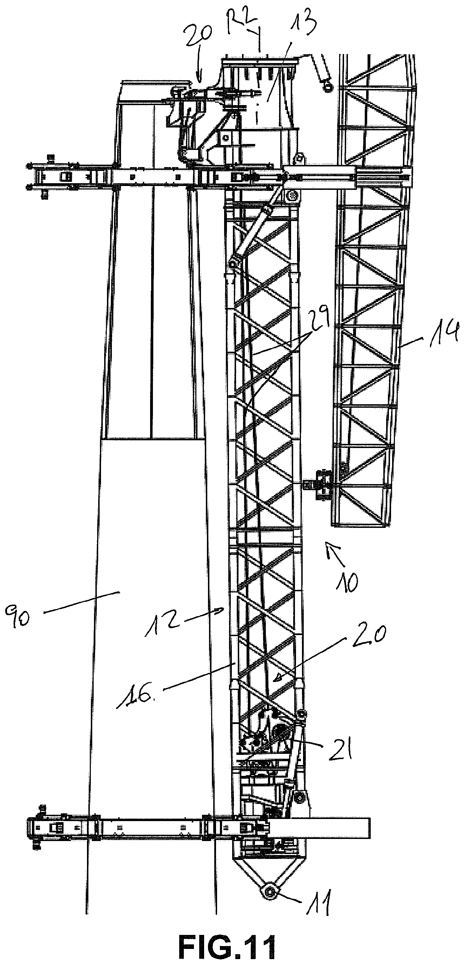

As can be seen in Figure 11, the at least one flipping pin (11) of the lifting structure (10) is disposed in a lower end of a main structure (12) or mast of the lifting structure (10).

The first auxiliary lifting means (20) comprise at least a first winch system (21) disposed in the interior of a main structure (12) of the lifting structure (10), as shown in Figure 11, preferably in a lower end of the lifting structure (10).

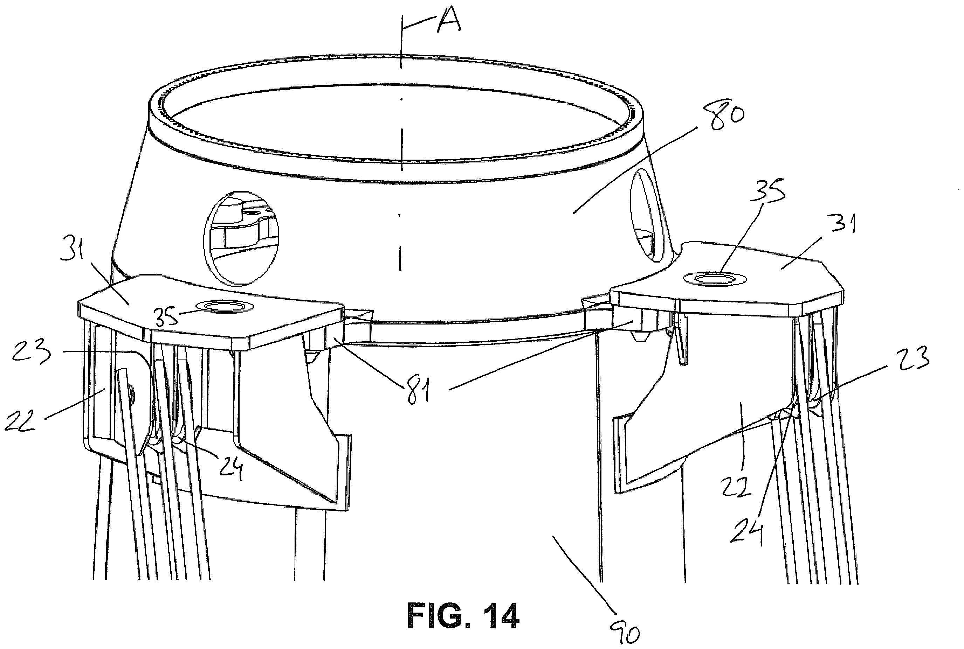

The first auxiliary lifting means (20) further comprise a set of cargo blocks (22) comprising idler pulleys (23, 24), wherein the set of cargo blocks (22) are fixed to an adapter (80) of the tower (90) of the wind turbine, wherein the set of cargo blocks (22) are disposed symmetrically with regard to an axis (A) of the tower (90) being fixed to the adapter in symmetrical lugs (81) disposed radially on the adapter (80) by means of platens (31) wherein the cargo blocks (22) are fixed, as shown in Figure 14.

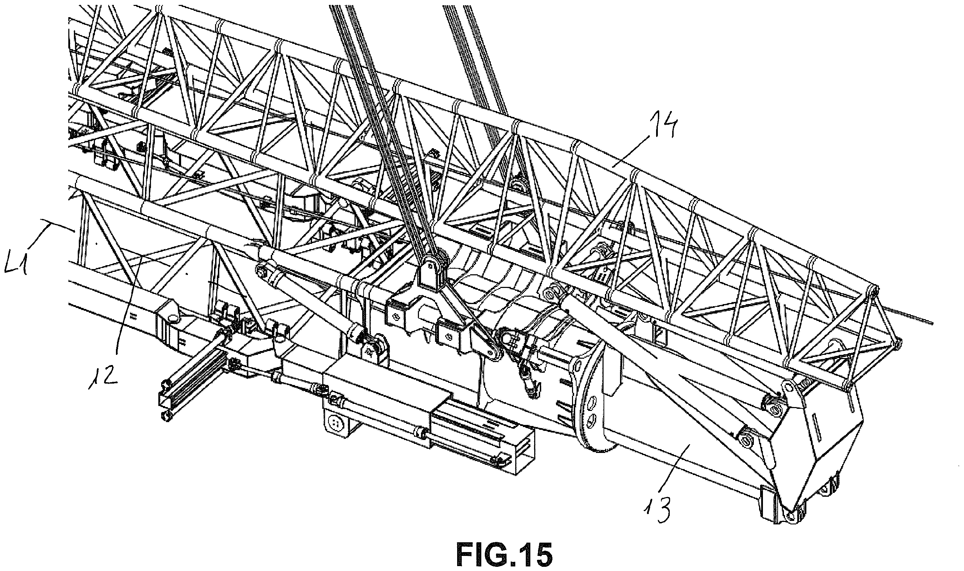

As it is shown in Figure 15, the first auxiliary lifting means (20) are also symmetric with regard to a longitudinal axis (L1) of the main structure (12) of the lifting structure (10). Thus, the flipping of the lifting structure (10) is carried out in a balanced way.

The first auxiliary lifting means (20) further comprise idler pulleys (25, 26, 27, 28) and hoisting means (29), preferably ropes disposed in main structure (12) of the lifting structure (10) that connect the first winch system (21) with the idler pulleys (23, 24) of the set of cargo blocks (22) fixed to the adapter (80) as will be explained now.

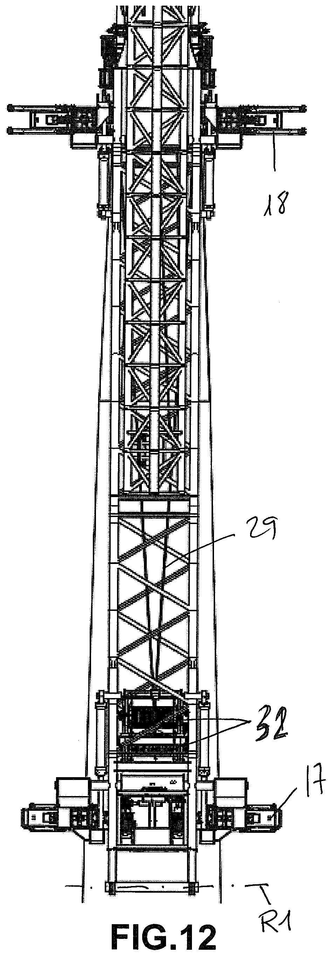

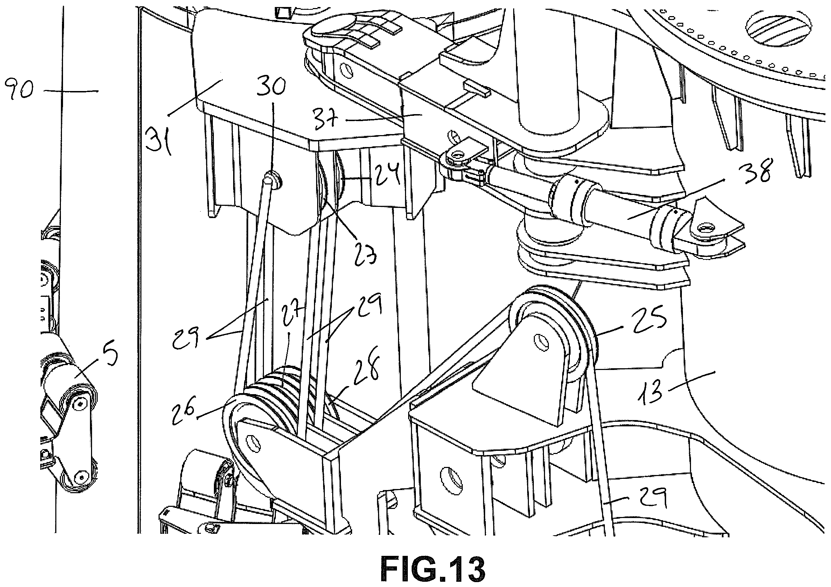

The first winch system (21) comprises two drums (32) with independent ropes (29), as shown in Figure 12, each one of them with one run on each side of the lifting structure (10). At each side of the lifting structure (10), a first single idler pulley (25) forwards the rope (29) from the first winch system (21) to a first idler pulley (28) of a second set of idler pulleys comprising three idler pulleys (26, 27, 28) and being disposed in an upper end of the main structure (12) of the lifting structure (10), as shown in Figure 13. The first idler pulley (28) of the second set of idler pulleys forwards the rope (29) from the first single idler puller (25) to a first idler pulley (24) of the cargo blocks (22). The first idler pulley (24) of the cargo blocks (22) forwards the rope (29) from the first idler pulley (28) of the second set of idler pulleys to a second idler pulley (27) of the second set of idler pulleys. The second idler pulley (27) of the second set of idler pulleys forwards the rope (29) from the first idler pulley (24) of the cargo blocks (22) to a second idler pulley (23) of the cargo blocks (22). The second idler pulley (23) of the cargo blocks (22) forwards the rope (29) from the second idler pulley (27) of the second set of idler pulleys to a third idler pulley (26) of the second set of idler pulleys. The third idler pulley (26) of the second set of idler pulleys forwards the rope (29) from the second idler pulley (23) of the cargo blocks (22) to a fixed point (30) of the set of cargo blocks (22).

Taking the first winch system (21) as a reference point, the first single idler pulley (25) and the second set of idler pulleys comprising three idler pulleys (26, 27, 28) have fixed positions since they are disposed in the lifting structure (10), while the idler pulleys (23, 24) of the set of cargo blocks (22) move relative to the first winch system (21) since they are disposed in the adapter (80) of the tower (90) or vice-versa, taking the set of cargo blocks (22) as a reference point, the idler pulleys (23, 24) of the set of cargo blocks (22) have fixed positions since they are disposed in the adapter (80) of the tower (90), while the first winch system (21), the first single idler pulley (25) and the second set of idler pulleys comprising three idler pulleys (26, 27, 28) move relative to the set of cargo blocks (22) since they are disposed in the lifting structure (10). Therefore, the input and output angles of the rope (29) on the first single idler pulley (25) are the same in all the positions during the assembly of the lifting structure (10). So, the first winch system (21) is configured to pull in the hoisting means (29), to flip the lifting structure (10) to the tower (90) and to lift the lifting structure (10) along the tower (90) till an attaching position as described below.

The lifting structure (10) comprises the main structure (12), preferably a lattice main structure, defining the longitudinal direction (L1), wherein the main structure (12) is configured to be disposed essentially parallel to the tower (90) of the wind turbine once attached to the tower (90) for transmitting the stresses of the lifting structure itself (10) and the wind turbine components to be lifted during the assembly of the wind turbine, to the foundation (92) through the tower (90).

The main structure (12) comprises a main body (16) and a rotating turret (13) configured to rotate with respect to the main body (16), by means of an articulated joint (not shown), wherein the rotating turret (13) comprises a longitudinal axis of rotation (R2) defined in the longitudinal direction (L1) of the main structure (12).

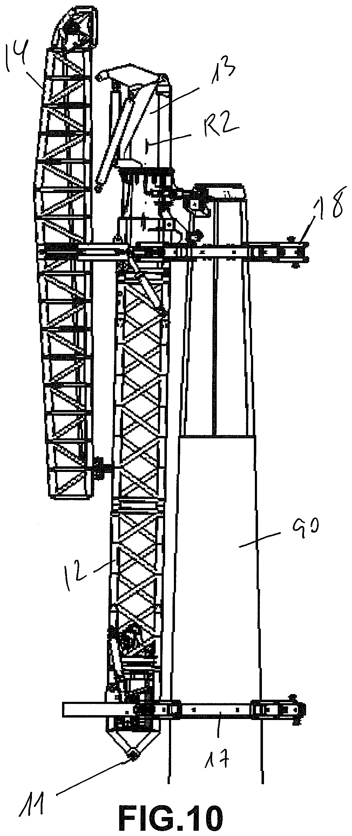

The lifting structure further comprises a boom (14) configured to lift the components of the wind turbine during its assembly, once the main structure (12) has been attached to the tower (90), as can be seen in Figure 10. The boom (14) is also configured to rotate with respect to the rotating turret (13), wherein the boom comprising an axis of rotation (R3) being essentially perpendicular to the longitudinal direction (L1) of the main structure (12). The rotation of the boom (14) with respect to the rotating turret (13) is carried out by means of first hydraulic means (15) that joins the rotating turret (13) and the boom (12).

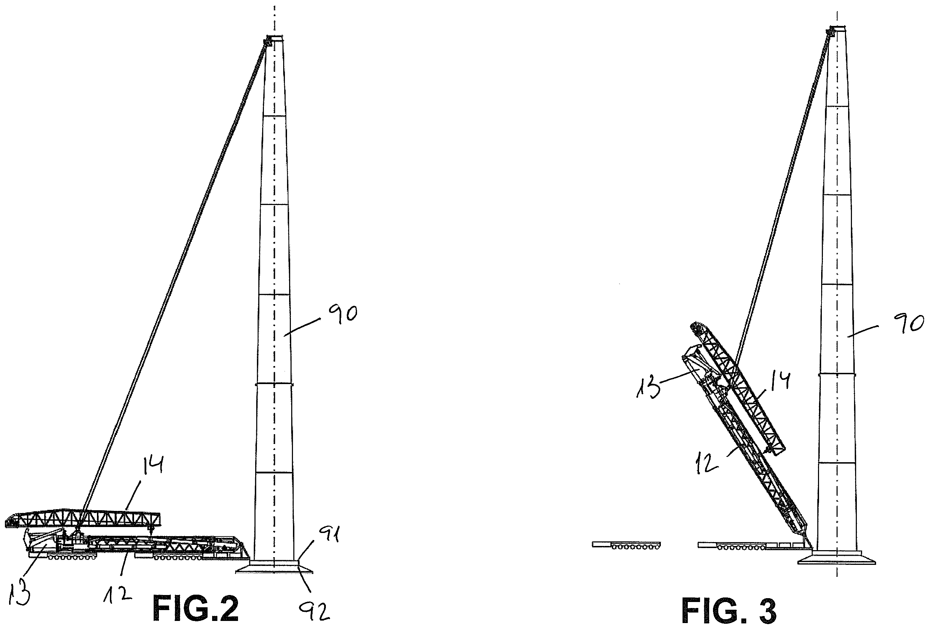

As can be seen in Figure 2, the lifting structure (2) is coupled to the flipping frame (1) of the flipping system in an essentially horizontal position, wherein the boom (14) of the lifting structure (10) is configured to be disposed above the main structure (12) when the lifting structure (10) is coupled to the flipping frame (1) in this horizontal position.

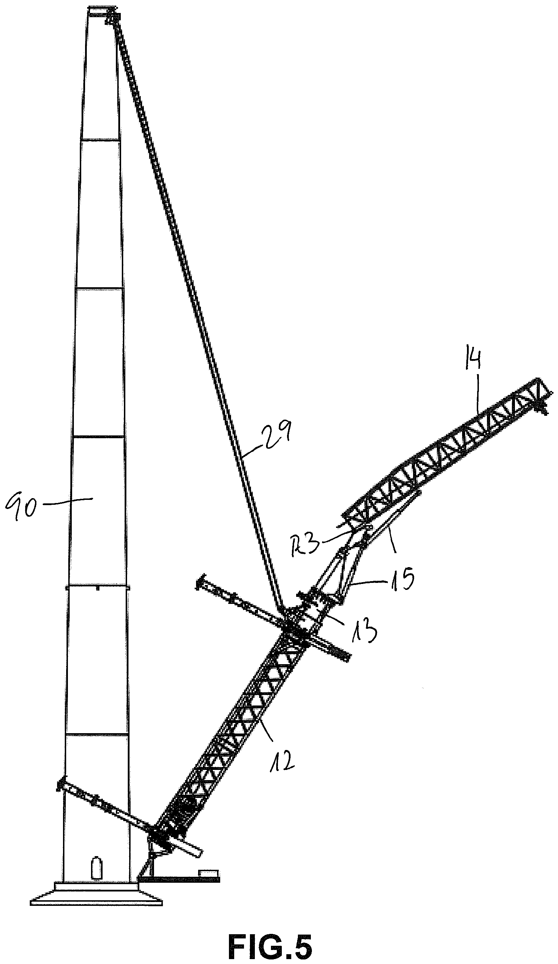

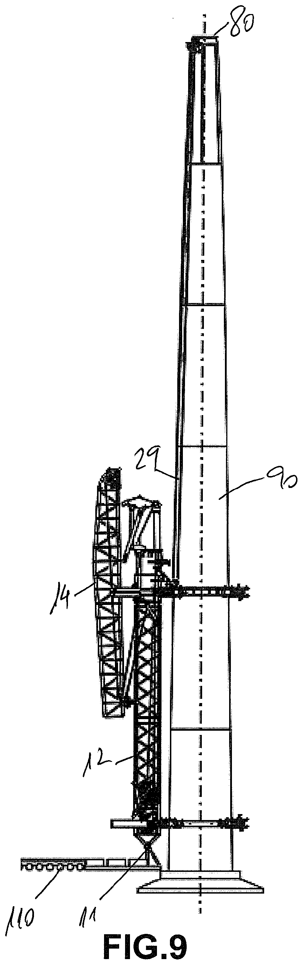

In this way, the boom (14) of the lifting structure (10) is configured to be rotated from a first position wherein the boom (14) is disposed above the main structure (12) of the lifting structure (10) as shown in Figure 2, to a second position wherein the boom (14) is disposed in such a way that the main structure (12) of the lifting structure (10) is disposed between the tower (90) and the boom (14) as shown in Figure 9. This is achieved by rotating the boom (14) with respect to the main structure (12) in a first direction, reaching a deadlock, as shown in Figure 5 and later rotating the rotating turret (13) with respect to the main body (16) of the main structure (12) around the longitudinal axis of rotation (R2) defined in the longitudinal direction (L1) of the main structure (12). After that, the rotation of the boom (14) with regards to the main structure (12) is carried out in a second direction opposite to the first direction.

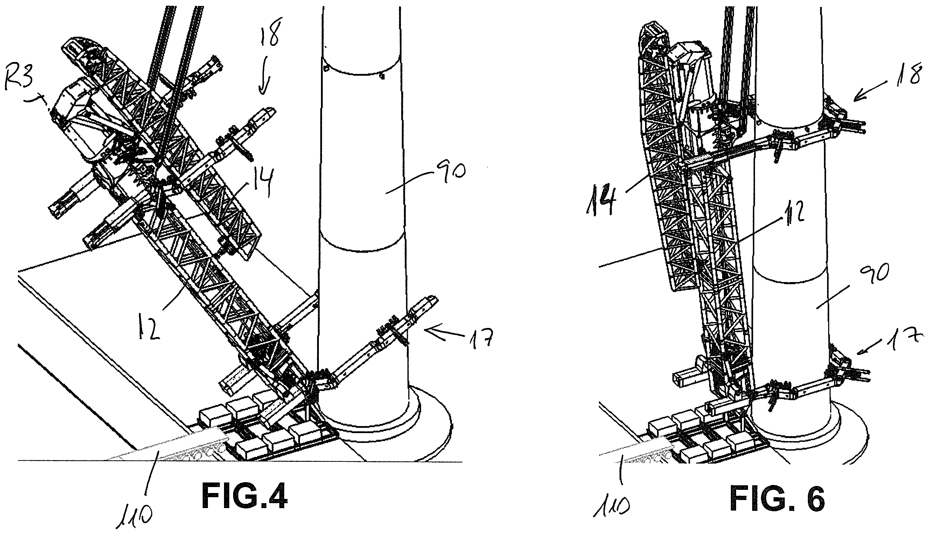

During the flipping, the boom (14) is maintained retracted against the main structure (12) as can be seen in Figure 4, except when the boom (14) is rotated from its first position to its second position, or vice-versa when the lifting structure (10) is dismantled from the tower.

In this embodiment, the tower (90) is a "full concrete" tower and the lifting structure (10) is flipped once all the tower sections have been assembled by means of a conventional crane (not shown) disposed on a site near to a base (91) of a foundation (92) of the tower (90).

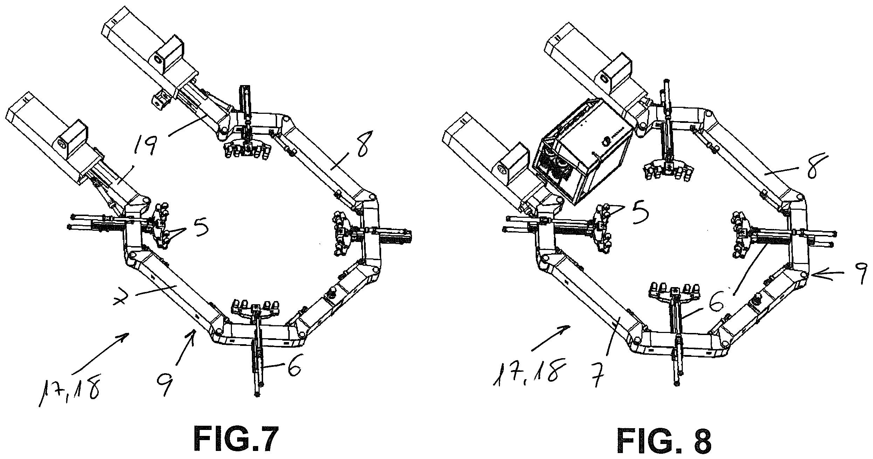

The lifting structure (10) comprises embracing means (17, 18), shown in Figures 7 and 8, configured to embrace the tower (90) and assist in the flipping of the lifting structure (10) once the embracing means (17, 18) are embracing the tower (90) as shown in Figure 6. The embracing means (17, 18) also are configured to embrace the concrete section or concrete sections of the tower (90) along the lifting of the lifting structure (10) till the attaching of the lifting structure (10) to the adapter (80) of the tower (90) that will be described below.

The embracing means (17, 18) are collapsible from a first position wherein the embracing means (17, 18) are essentially parallel to the main structure (12) of the lifting structure (10) as shown in Figure 3 to a second position wherein the embracing means (17, 18) are essentially perpendicular to the main structure (12) of the lifting structure (10) as shown in Figure 4, in order to not interfere with the rope (29) of the first auxiliary lifting means (20).

In this embodiment, the embracing means (17, 18) comprise lower embracing means (17) configured to embrace the tower (90) at a lower position and upper embracing means (18) configured to embrace the tower (90) at an upper position higher than the lower position, wherein the lower position corresponds with a lower section of the tower (90). At least one of the lower embracing means (17) and the upper embracing means (18) comprises first telescopic arms (19) configured to be retracted and, in this way, assist in the flipping of the lifting structure (10) once the embracing means (17, 18) are embracing the tower (90), as can be seen in Figures 4, 5 and 6. The embracing means (17, 18) comprises an external structure (9) that surrounds the tower section once the embracing means (17, 18) embrace the tower section. Preferably, the external structure (9) is an octagonal structure opened by a side, the external structure (9) comprising a right part (7) and a left part (8) linked in a decoupled manner for allowing the external structure (9) to surround the tower (90). The embracing means (17, 18) further comprises second telescopic arms (6) configured to adjust the embracing means (17, 18) to the diameter of the tower section wherein they are disposed and to transmit the loads of the lifting structure (10) to the tower (90), preferably by means of hydraulic means, wherein the second telescopic arms (6) are joined to the rigid structure (9) as can be seen in Figures 7 and 8. The second telescopic arms (6) comprise a free end proximal to the tower when the embracing means (17, 18) embraces the tower (90), wherein the second telescopic arms (6) comprise guiding means (5) or wheels configured to roll and grip the embracing means (17, 18) on an external surface of the tower (90) during the lifting of the lifting structure (10).

Once the lifting structure (10) is in front of the adapter (80), the lifting structure is attached to the platens (31) of the set of cargo blocks (22) of the first auxiliary lifting means (20) attached to the adapter (80) disposed above the highest concrete section of the tower (90) for carrying out the assembly of the wind turbine components others than the tower (90), by means of the lifting structure (10), until the whole wind turbine is assembled. For making this, the assembly system comprises attaching means (35, 36) configured to attach the lifting structure (10) to adapter (80) of the tower (90), wherein the attaching means (35, 36) comprises holes (35) disposed on the platens (31) of the set of cargo blocks (22) configured to receive antagonist pins (36) disposed in a free end of third telescopic arms (37) disposed in the lifting structure (10), preferably in the rotating turret (13). Preferably, the lifting structure (10) further comprises second hydraulic means (38) joined to the rotating turret (13) and to the third telescopic arms (37) and configured to carry out angular adjustment in order to provide a positioning tolerance that facilitates the process of installing the lifting structure (10) in its working position, to get the pins (36) to face the holes (35) as shown in Figure 13.

In a fifth aspect of the invention, the assembly system comprises second auxiliary lifting means (70) configured to lift, at least partially, the first auxiliary lifting means (20) to its position on the adapter (80).

Preferably, the second auxiliary lifting means comprises a crane (71) fixed to the adapter (80), wherein the adapter (80) further comprises openings (88) configured, in use, to allow the passage of the crane (71), preferably a telescopic crane comprising an arm passing through the openings of the adapter (80).

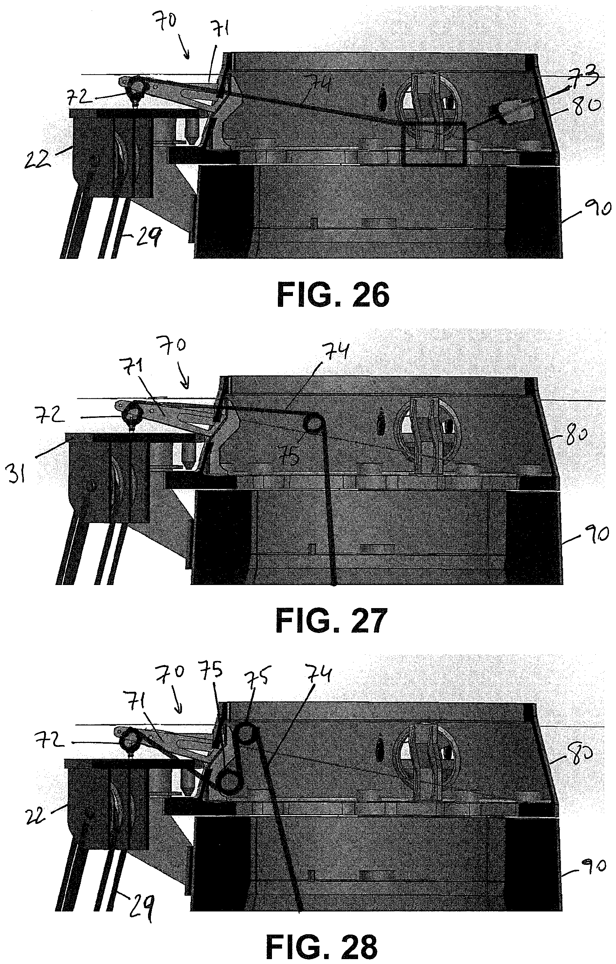

In a first preferred embodiment shown in Figure 26, the second auxiliary lifting means (70) comprises the crane (71) which in turn comprises a pulley (72), a second winch system (73) attached to the adapter (80) and a second rope (74) configured to connect the second winch system (73) to the pulley (72) of the crane (71) fixed to the adapter (80).

In a second preferred embodiment shown in Figure 27, the second auxiliary lifting means (70) comprises the crane (71) which in turn comprises a pulley (72), a second winch system (not shown) attached to the base of the tower (90), one idler pulley (75) fixed to an auxiliary element (not shown) fixed to the adapter (80) and a second rope (74) configured to connect the second winch system to the pulley (72) of the crane (71) fixed to the adapter (80) through the idler pulley (75).

In a third preferred embodiment shown in Figure 28, the second auxiliary lifting means (70) comprises the crane (71) which in turn comprises a pulley (72), a second winch system (not shown) attached to the base of the tower (90), two idler pulleys (75) fixed to the adapter (80) and a second rope (74) configured to connect the second winch system to the pulley (72) of the crane (71) fixed to the adapter (80) through the two idler pulleys (75).

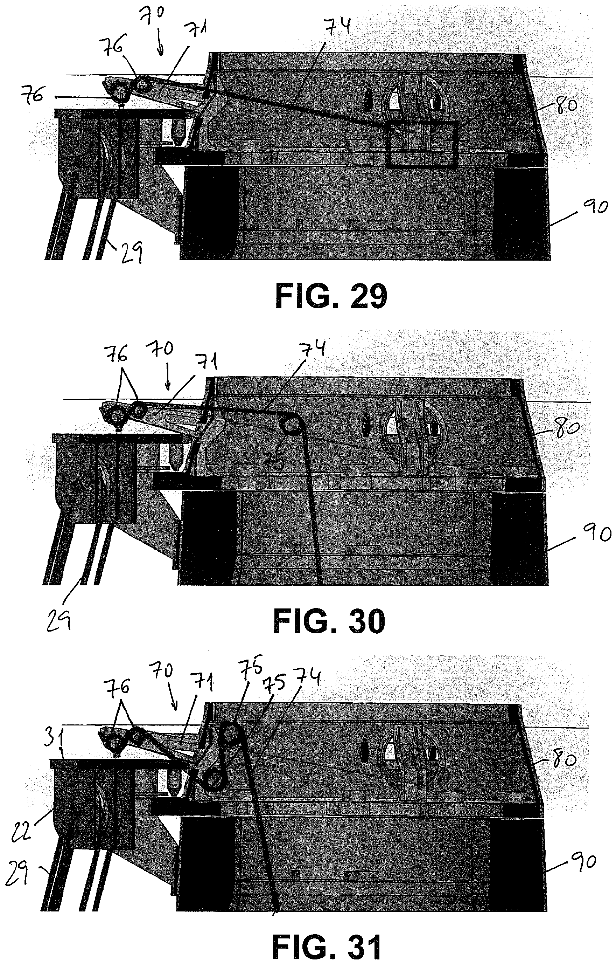

In fourth preferred embodiment shown in Figure 29, the second auxiliary lifting means (70) comprises the crane (71) which in turn comprises two movable pulleys (76) disposed on the crane (71), a second winch system (73) or a block and tackle system attached to the adapter (80), and a second rope (74) configured to connect the second winch system (73) to the movable pulleys (76) of the crane (71) fixed to the adapter (80).

In fifth preferred embodiment shown in Figure 30, the second auxiliary lifting means (70) comprises the crane (71) which in turn comprises two movable pulleys (76) disposed on the crane (71), one idler pulley (75) fixed to an auxiliary element (not shown) fixed to the adapter (80), a second winch system (not shown) attached to the base of the tower (90) and a second rope (74) configured to connect the second winch system to the movable pulleys (76) of the crane (71) fixed to the adapter (80) through the idler pulley (75).

In sixth preferred embodiment shown in Figure 31, the second auxiliary lifting means (70) comprises the crane (71) which in turn comprises two movable pulleys (76) disposed on the crane (71), two idler pulleys (75) fixed to the adapter (80), a second winch system (not shown) attached to the base of the tower (90) and a second rope (74) configured to connect the second winch system to the movable pulleys (76) of the crane (71) fixed to the adapter (80) through the two idler pulleys (75).

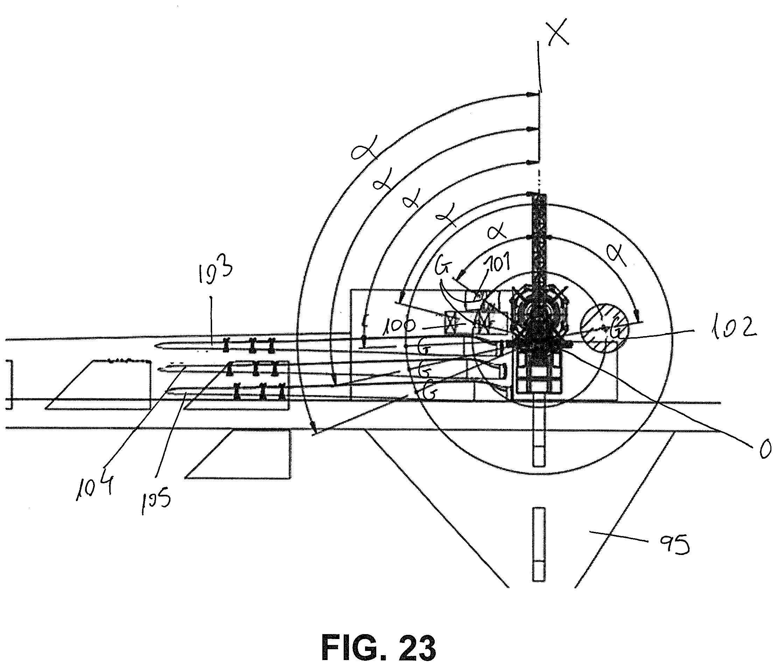

The components of the wind turbine to be lifted by the lifting structure (10) are disposed in a layout of the components of the wind turbine shown in Figure 23.

The layout of the components of the wind turbine comprises at least:
- a first wind turbine component being a nacelle (100) of the wind turbine, a second wind turbine component being a drive train (101) of the wind turbine, a third wind turbine component being a rotor hub (102) of the wind turbine and at least a fourth wind turbine component being a blade (103, 104, 105) of the wind turbine, wherein the layout further comprises an angular origin point (O) being essentially coincident with the intersection of the axis of rotation (R2) of the rotating turret (13) with respect to the main structure (12), with regard to the base (91) of the foundation (92) of the tower (90) and an angular origin line (X) defined as the horizontal projection with regard to the base (91) of the foundation (92) of the tower (90) of a line that joins the axis of rotation (R2) of the rotating turret (13) and the axis (A) of the tower (90), wherein the horizontal projection of the position of the boom (14) of the lifting structure (10) once the lifting structure (10) is attached to the tower (90) forms an angle (α) with respect to the angular origin line (X); and
wherein the centre of gravity (G) of each one of the wind turbine components (100, 101, 102, 103, 104, 105) to be assembled is disposed in the following angle range with regard to the angular origin line:
nacelle (100): [71º, 81º];
drive train (101): [50º, 60º];
rotor hub (102): [275º, 285º]; and
blade (103, 104, 105): [88º, 118º].

Preferably, the centre of gravity (G) of each one of the wind turbine components (100, 101, 102, 103, 104, 105) is disposed in the following angle (α) with regard to the angular origin line:
nacelle (100): 76º;
drive train (101): 55º;
rotor hub (102): 280º;
a first blade (103): 93º;
a second blade (104): 103º; and
a third blade (105): 113º.

Preferably, a centre of gravity of the nacelle (100) is between 10 and 18m from the angular origin point (O), more preferably at 14m and/or a centre of gravity of the drive train (101) is between 10 and 18m from the angular origin point, more preferably at 14m and/or a centre of gravity of the rotor hub (102) is between 10 and 18m from the angular origin point, more preferably at 14m and/or a center of gravity of the at least one blade (103, 104, 105) is between 24 and 32m from the angular origin point, more preferably at 28m.

Following it is described the assembly method of a wind turbine carried out with the assembly system comprising the lifting structure (10) and the layout of the components of a wind turbine as described above, wherein the assembly method comprises the following steps once the lifting structure (10) is attached to the tower (90):
- a step of lifting a nacelle (100) from a position wherein the horizontal projection of the boom (14) is disposed in the following angle range with regard to the angular origin line: [71º, 81º];
- a step of lifting a drive train (101) from a position wherein the horizontal projection of the boom (14) is disposed in the following angle range with regard to the angular origin line: [50º, 60º];
- a step of lifting a rotor hub (102) from a position wherein the horizontal projection of the boom (14) is disposed in the following angle range with regard to the angular origin line: [265º, 295º]; and
- a step of lifting at least one blade from a position wherein the horizontal projection of the boom is disposed in the following angle range with regard to the angular origin line: [78º, 128º].

Preferably, the position of the horizontal projection of the boom forms the following angle (α) with each one of the wind turbine components (100, 101, 102, 103, 104, 105):
with the nacelle (100): 76º;
with the drive train (101): 55º;
with the rotor hub (102): 280º;
with the first blade (103): 93º;
with the second blade (104): 103º; and
with the third blade (105): 113º.

The step of lifting the nacelle (100) is carried from a distance between 10 and 18m from the angular origin point, more preferably at 14m and/or the step of lifting the drive train (101) is carried from a distance between 10 and 18m from the angular origin point, more preferably at 14m and/or the step of lifting the rotor hub (102) is carried from a distance between 10 and 18m from the angular origin point, more preferably at 14m and/or the step of lifting the first (103), second (104) and third blade (105) is carried from a distance between 24 and 32m from the angular origin point, more preferably at 28m.

In the steps of lifting the nacelle (100) and/or the drive train (101) and/or the rotor hub (102), the boom (14) is disposed forming an angle (β) between 42.4º and 72.4º, preferably 57º with a floor in the vicinity of the tower (90) and/or in the step of lifting the at least one blade (103, 104, 105), the boom (14) is disposed forming an angle (β) between -15º and 15º with a floor in the vicinity of the tower (90).

Furthermore, the assembly system further comprises transportation means (110) configured to position the lifting structure (10) in the proximity of the tower (90) carrying out the flipping of the lifting structure (10) from the essentially horizontal position to the essentially vertical position wherein the lifting structure is positioned and attached to the tower of the wind turbine. Preferably, the transportation means (110) comprises a self-propelled modular transporter.

## Claims

1. Wind turbine assembly system comprising a flipping system configured to carry out the lifting of a lifting structure (10) configured to assembly, at least partially, the wind turbine comprising a tower (90), wherein the flipping system is configured to flip the lifting of the lifting structure (10) from an essentially horizontal position to an essentially vertical position wherein the lifting structure (10) is positioned and attached to the tower (90) of the wind turbine, and wherein the flipping system comprises:
- a flipping frame (1) comprising at least one first connection element (2);
- the lifting structure (10) to be flipped, wherein the lifting structure (10) comprises at least one second connection element (11);
wherein the at least one first connection element (2) is configured to be coupled to the at least one second connection element (11).

2. The wind turbine assembly system of claim 1, wherein the first connection element (2) is configured to be coupled to the at least one second connection element (11) in a rotary manner defining an axis of rotation (R1).

3. The wind turbine assembly system of claim 2, wherein the flipping system further comprises first auxiliary lifting means (20) configured to flip the lifting structure (10) to be flipped in a rotary manner around the axis of rotation (R1).

4. The wind turbine assembly system of any one of previous claims, wherein the at least one first connection element (2) comprises at least one pivoting hole or at least one flipping pin.

5. The wind turbine assembly system of any one of previous claims, wherein the at least one second connection element (11) comprises at least one flipping pin or at least one pivoting hole.

6. The wind turbine assembly system of any one of previous claims, wherein the lifting structure (10) comprises:
- a main structure (12) comprising a longitudinal direction and being configured to be disposed essentially parallel to the tower (90) of the wind turbine once attached to the tower (90) for transmitting the stresses of the lifting structure (10) itself and the wind turbine components being lifted during the assembly of the wind turbine;
- a rotating turret (13) configured to rotate with respect to a main body (16) of the main structure (12), wherein the rotating turret (13) comprises a longitudinal axis of rotation (R2) being essentially parallel to the longitudinal direction (L1) of the main body (16); and.
- a boom (14) configured to lift the components of the wind turbine during its assembly, once the main structure (12) has been attached to the tower (90).

7. The wind turbine assembly system of any one of previous claims, wherein the boom (14) is also configured to rotate with respect to the rotating turret (13) comprising an axis of rotation (R3) being essentially perpendicular to the longitudinal direction (L1) of the main structure (12).

8. The wind turbine assembly system of claim 7, wherein the boom (14) of the lifting structure (10) is configured to be disposed above the main structure (12) when the lifting structure (10) is coupled to the flipping frame (1) of the flipping system essentially in a horizontal position.

9. The wind turbine assembly system of claim 8, wherein the boom (14) of the lifting structure (10) is configured to be rotated from a first position wherein the boom (14) is disposed above the main structure (12) of the lifting structure (10) to a second position wherein the boom (14) is disposed in such a way that the main structure (12) of the lifting structure is disposed between the tower and the boom (14).

10. The wind turbine assembly system of any one of previous claims, wherein the lifting structure comprises embracing means (17, 18) configured to configured to embrace the tower (90) and assist in the flipping of the lifting structure (10) once the embracing means (17, 18) are embracing the tower (90).

11. The wind turbine assembly system of claims 6 and 10, wherein the embracing means (17, 18) are collapsible from a first position wherein the embracing means (17, 18) are essentially parallel to the main structure (12) of the lifting structure (10) to a second position wherein the embracing means (17, 18) are essentially perpendicular to the main structure (12) of the lifting structure (10).

12. The wind turbine assembly system of claim 3 wherein the first auxiliary lifting means (20) comprise at least:
- a first winch system (21) disposed in the interior of the lifting structure (10);
- a set of cargo blocks (22) fixed to an adapter attached disposed above a highest concrete section of the tower (90). and
- hoisting means (29) that connects the first winch system (21) with the set of cargo blocks (22) fixed to the adapter, wherein the hoisting means (29) are disposed, at least partially, in the interior of the lifting structure (10).

13. Wind turbine assembly method carried out with the assembly system of any of the previous claims, wherein the method comprises the following steps carried out before steps of lifting wind turbine components:
- a step of coupling the lifting structure to be flipped to a flipping frame, optionally in a rotary manner; and
- a step of flipping a lifting structure from an essentially horizontal position to an essentially vertical position wherein the lifting structure is positioned and attached to the tower of the wind turbine.

14. The method of claim 13, further comprising the following step before the step of flipping the lifting structure:
- a step of lifting and attaching first auxiliary lifting means to a position on the tower; and
further comprising the following steps after the beginning of the step of flipping the lifting structure:
- a step of embracing at least a tower section of the tower by means of the lifting structure;
- a step of lifting the lifting structure along the tower;
- a step of attaching the lifting structure to the tower.

15. The method of any one of claims 13 or 14, further comprising the following steps carried out after steps of lifting wind turbine components:
- a step of detaching the lifting structure from the tower;
- a step of descending the lifting structure;
- a step of releasing the lifting structure from the at least a tower section;
- a step of coupling the lifting structure to the flipping frame, optionally in a rotary manner;
- a step of flipping the lifting structure from the essentially vertical position wherein the lifting structure is positioned and attached to the tower of the wind turbine to the essentially horizontal position.
